# EUROPÄISCHE PATENTANMELDUNG

(11) **EP 4 474 294 A2**
(43) Veröffentlichungstag der Anmeldung: **11.12.2024**
(21) Anmeldenummer: 24208727.8
(22) Anmeldetag: 22.06.2022
(51) Int. Cl.: B65B 1/18

(54) **VERSCHLIESSVORRICHTUNG FÜR FLEXIBLE BEHÄLTNISSE**

(62) Teilanmeldung aus: 22180478.4
(71) Anmelder: GREIF-VELOX Maschinenfabrik GmbH, 23560 Lübeck (DE)
(72) Erfinder: Boje, Alexander, 23560 Lübeck (DE); Tillack, Bernd, 23560 Lübeck (DE); Drews, Ralf, 23560 Lübeck (DE); Mildner, Alexander, 23560 Lübeck (DE)
(74) Vertreter: Patentanwälte Hemmer Lindfeld Frese Partnerschaft mbB

(57) **Zusammenfassung**

Eine Verschließvorrichtung (2) zum Verschließen eines flexiblen Behältnisses (4), insbesondere eines Ventilsacks (4), weist eine Verschweißeinrichtung (14), eine Sensoreinrichtung (20) zum Erfassen einer Position eines zu verschließenden Teils (6) des Behältnisses (4) und eine Steuereinheit (28) auf, wobei die Steuereinheit (28) mit der Sensoreinrichtung (20) und der Verschweißeinrichtung (14) gekoppelt ist und dazu ausgebildet ist, durch Ansteuerung mindestens einer Bewegungseinrichtung die Verschweißeinrichtung (14) in eine erste Position und eine davon beabstandete zweite Position an dem zu verschließenden Teil (6) des Behältnisses (4) zu platzieren, das Erreichen zumindest einer der beiden Positionen durch die Sensoreinheit (20) zu erkennen, und jeweils an der ersten und der zweiten Position die Verschweißeinrichtung (14) zum Erzeugen einer Schweißnaht an dem Behältnis (4) anzusteuern.

## Beschreibung

Verschließen eines flexiblen Behältnisses, insbesondere eines Ventilsacks, mit den im Oberbegriff des Anspruchs 1 angegebenen Merkmalen.

Zum Befüllen flexibler Behältnisse, beispielsweise von Ventilsäcken, mit pulverigem Füllgut sind aus dem Stand der Technik verschiedene Befüllvorrichtungen bekannt. Diese fördern das Füllgut durch Druck oder durch Anwendung eines Vakuums in einer entsprechenden Vakuumkammer. Nach dem Befüllen wird das Behältnis im Bereich eines Ventils, das bei Ventilsäcken ein kurzes, schlauchförmiges Endstück des Sacks darstellt, durch Verschweißen, Falten oder ähnliches verschlossen, um das Füllgut vollständig zu umschließen und dadurch vor äußeren Einflüssen zu schützen. Anschließend wird der Ventilsack einer weiteren Verarbeitung oder einem Transport zugeführt.

Derartige Abfüllvorrichtungen zählen zum Stand der Technik und werden beispielsweise von der Greif-Velox Maschinenfabrik GmbH in Lübeck hergestellt und weltweit vertrieben. Zum Stand der Technik zählen Vakuumpacker, Luftpacker, Turbinenpacker und andere, die dazu dienen, ein pulveriges oder körniges Produkt in einem Behältnis abzupacken und dieses Behältnis nachfolgend zu verschließen. Derartige Vorrichtungen weisen daher ein Maschinengestell auf, in dem typischerweise neben einer Befülleinrichtung auch eine Verschließeinrichtung vorgesehen ist, mit welcher das befüllte Behältnis verschließbar ist. Üblicherweise weisen die Verschließeinrichtungen eine Ultraschallschweißvorrichtung auf, welche eine Sonotrode und einen Amboss umfasst, die einen vorgesehenen Abschnitt des betreffenden Behältnisses einschließen und verschweißen. Verschweißte Ventilsäcke können einen zwischen einer Schweißnaht und einem äußeren Ende des Ventils einen unverschweißten Überstand aufweisen, in dem Reste des in den Ventilsack gefüllten Produkts verbleiben können und nach dem Verschweißen herausrieseln. Dies kann zu einer unerwünschten Ansammlung von Produktresten bzw. einer Verschmutzung im Bereich der Abfüllvorrichtung führen.

Aufgabe der vorliegenden Erfindung ist es, eine alternative Befüllvorrichtung mit einer Verschließvorrichtung oder eine alternative Verschließvorrichtung zum Verschließen flexibler Behältnisse bereitzustellen, bei dem das betreffende flexible Behältnis derart verschlossen werden kann, dass nur geringstmögliche Mengen des in das Behältnis eingefüllten Produkts nach dem Verschließen austritt.

Diese Aufgabe wird gemäß der Erfindung durch eine Verschließvorrichtung zum Verschließen eines flexiblen Behältnisses mit den in Anspruch 1 angegebenen Merkmalen gelöst. Vorteilhafte Ausgestaltungen der Vorrichtung ergeben sich aus den Unteransprüchen, der nachfolgenden Beschreibung und der Zeichnung.

Die erfindungsgemäße Verschließvorrichtung zum Verschließen eines flexiblen Behältnisses, insbesondere eines Ventilsacks, weist eine Verschweißeinrichtung, eine Sensoreinrichtung zum Erfassen einer Position eines zu verschließenden Teils des Behältnisses und eine Steuereinheit auf, wobei die Steuereinheit mit der Sensoreinrichtung und der Verschweißeinrichtung gekoppelt ist und dazu ausgebildet ist, durch Ansteuerung mindestens einer Bewegungseinrichtung die Verschweißeinrichtung in eine erste Position und eine davon beabstandete zweite Position an dem zu verschließenden Teil des Behältnisses zu platzieren, das Erreichen zumindest einer der beiden Positionen durch die Sensoreinheit zu erkennen, und jeweils an der ersten und der zweiten Position die Verschweißeinrichtung zum Erzeugen einer Schweißnaht an dem Behältnis anzusteuern.

Die erfindungsgemäße Vorrichtung kann mit einer Befüllvorrichtung gekoppelt oder darin integriert werden, indem sie an einem Maschinengestell der Befüllvorrichtung angeordnet wird. Damit kann das Behältnis direkt nach dem Befüllen auf vorteilhafte Weise verschlossen werden. Ein Kerngedanke der Erfindung liegt darin, das flexible Behältnis mit zwei voneinander beabstandeten Schweißnähten an dem zu verschließenden Teil zu verschließen. Die Positionen der beiden Schweißnähte können abhängig von der Ausführung des Behältnisses auf sinnvolle Weise gewählt werden. Insbesondere bei der Ausführung des flexiblen Behältnisses als Ventilsack mit einem Füllventil bzw. einem abstehenden Ventilabschnitt könnte die erste Schweißnaht an einem sackseitigen, inneren Ende des Füllventils und die zweite Schweißnaht an einem davon beabstandeten, äußeren Ende des Füllventils erstellt werden. Ein Austreten eines in dem Füllventil befindlichen Rests von Füllgut aus dem Behältnis wird damit verhindert. Durch Setzen der zweiten Schweißnaht an einem äußeren Ende des Füllventils kann ein offener Überstand des Füllventils minimiert werden, sodass das Herausrieseln des Füllguts praktisch eliminiert wird. Zudem ist ein Abschneiden des Überstands nicht notwendig.

Die Bewegungseinrichtung könnte zu der Verschließvorrichtung und/oder zu der Befüllvorrichtung gehören, in der die Verschließvorrichtung integriert ist. Die Steuereinheit kann mit einer entsprechenden Steuerroutine ausgestattet sein, die neben dem Ansteuern der Verschweißeinrichtung auch das Ansteuern der Bewegungseinrichtung umfasst. Die Realisierung der Bewegungseinrichtung könnte mehrere Varianten umfassen. In einer ersten Variante könnte die Bewegungseinrichtung dazu vorgesehen sein, das flexible Behältnis zu tragen und zu bewegen und könnte daher einer Befüllvorrichtung zugeordnet sein. Die Bewegungseinrichtung könnte darin etwa dazu ausgebildet sein, ein leeres Behältnis aufzunehmen und einem Befüllstutzen zuzuführen. Nach dem Vorgang des Befüllens kann die Bewegungseinrichtung das befüllte Behältnis zum Einnehmen der ersten bzw. zweiten Position der Verschweißeinrichtung an dem zu verschließenden Teil bewegen. Es ist vorstellbar, die Verschweißeinrichtung und die Sensoreinrichtung dann weitgehend stationär anzuordnen. Es könnte sich in dieser Variante anbieten, einen Roboterarm als Bewegungseinrichtung vorzusehen, der komplexe, auch räumliche Bewegungen durchführen kann, die neben dem Befüllen und Verschließen auch das Ablegen auf ein Förderband oder eine Palette oder die Weitergabe an eine Handhabungseinrichtung umfassen kann. Das Steuergerät kann den Roboterarm entsprechend ansteuern, um das Behältnis nach dem Befüllen an der Verschweißeinrichtung zu positionieren.

In einer weiteren Variante könnte die Bewegungseinrichtung auch ein Teil der Verschließeinrichtung sein. Sie ist dann dazu vorgesehen, die Verschweißeinrichtung relativ zu einem zugeführten Füllventil oder einem anderen zu verschließenden Teil des Behältnisses zu bewegen, zumindest entlang einer linearen Bahn. Ist das zu verschließenden Behältnis als Ventilsack ausgeführt, sind die Schweißnähte bevorzugt an zwei voneinander beabstandeten Positionen entlang des Füllventils zu erzeugen. Hierzu könnte eine Linearführung mit einem Linearantrieb ausreichen, sodass der Weg zwischen der ersten Position und der zweiten Position entlang des Füllventils zurückgelegt werden kann.

Eine Kombination aus diesen Varianten ist ebenso denkbar, indem beispielsweise das Behältnis mittels einer ersten Bewegungseinrichtung, die zu der Befüllvorrichtung gehört, bewegt wird, und die Verschweißvorrichtung mittels einer zweiten Bewegungseinrichtung, die zu der Verschließeinrichtung gehört, relativ zu dem Behältnis bewegt wird. Die erste Bewegungseinrichtung könnte im Wesentlichen zur Aufnahme der mechanischen Lasten des Behältnisses und die zweite Bewegungseinrichtung zur präzisen Positionierung der Verschweißeinrichtung dienen.

Ein weiterer Kernaspekt der Erfindung liegt in der Verwendung einer Sensoreinrichtung, die dazu ausgebildet ist, eine Position des zu verschließenden Teils des Behältnisses zu erfassen. Die Steuereinheit ist in der Lage, Sensordaten von der Sensoreinrichtung zu erhalten, um die entsprechende Bewegungseinrichtung zum Einnehmen der ersten Position und der zweiten Position ansteuern zu können. Abhängig von der Art des Behältnisses kann es ausreichen, lediglich eine der beiden Positionen genau zu erfassen. Ist etwa eine erste Schweißnaht an einem sackseitigen Ende eines Füllventils und eine zweite Schweißnaht an einem äußeren Ende des Füllventils gewünscht, könnte die Sensoreinrichtung dazu ausgebildet sein, lediglich die zweite Position zu erfassen. Dies kann etwa durch Erfassen einer Endkante des Füllventils erfolgen. Die erste Position, die zu der ersten Schweißnaht gehört, kann durch herkömmliche Verfahren erreicht werden, wobei die Genauigkeit der Platzierung der ersten Schweißnaht in dem genannten Beispiel nicht von übergeordneter Bedeutung ist.

Die Steuereinheit kann als dedizierte Steuereinheit realisiert sein. Alternativ dazu könnte die beschriebene Funktion der Steuereinheit auch lediglich als entsprechende Steuerroutine oder als geeigneter Algorithmus in eine bereits vorhandene Steuereinheit einer Befüllvorrichtung integriert werden.

Die Sensoreinrichtung könnte eine optische Sensoreinrichtung umfassen, die dazu ausgebildet ist, mittels optischer Verfahren eine Position des zu verschließenden Teils des Behältnisses zu erfassen. Beispielsweise erfolgt dies durch eine Lichtschranke, eine Kamera oder eine laserbasierte Positions- und Entfernungserfassungseinrichtung.

In einer vorteilhaften Ausführungsform ist die Verschweißeinrichtung eine thermische Schweißeinrichtung oder eine Ultraschallschweißeinrichtung, wobei die Ultraschallschweißeinrichtung einen Amboss zur Auflage des zu verschließenden Teils des Behältnisses, insbesondere eines Füllventils eines Ventilsacks, und eine Sonotrode umfasst, die zueinander bewegbar angeordnet sind. Der Amboss ist als Gegenlager für die Sonotrode ausgebildet und dient der Auflage des Füllventils oder eines anderen, entsprechenden zu verschließenden Teils des Behältnisses. Diese Bauteile sind zueinander bewegbar angeordnet, sodass sie zum Zwecke des Schweißvorgangs unter Einschluss des zu verschließenden Teils aufeinander zubewegt und zur Anlage an das Behältnis gebracht werden können. Zum Auflegen des zu verschließenden Teils auf den Amboss werden die beiden Bauteile voneinander entfernt. Dabei kann es vorteilhaft sein, eines der beiden Bauteile feststehend und das andere beweglich anzuordnen, wobei grundsätzlich auch der Amboss und die Sonotrode zueinander bewegbar angeordnet sein könnten. Eine gemeinsame Bewegung von Amboss und Sonotrode mittels der oben genannten Bewegungseinrichtung ist hiervon jedoch unabhängig.

Die Sensoreinrichtung könnte mindestens eine Lichtschranke aufweisen. In einer einfachen Ausgestaltung könnte eine einzelne Lichtschranke vorgesehen sein, die dazu ausgebildet ist, ein überstehendes Ende eines zu verschließenden Teils des Behältnisses zu erfassen. Die Lichtschranke könnte derart an der Verschweißvorrichtung positioniert sein, dass das in die Verschweißvorrichtung ragende Ende des zu verschließenden Teils den Lichtstrahl der Lichtschranke gerade nicht mehr unterbricht, sobald die zweite Position erreicht ist. Die Verwendung einer Reflexionslichtschranke bzw. eines Lichttasters kann ebenso vorteilhaft sein, da dieser lediglich auf einer Seite des Behältnisses zu platzieren ist und damit weniger Bauraum beansprucht.

Die mindestens eine Lichtschranke könnte mindestens eine Reflexionslichtschranke umfassen, die sonotrodenseitig angeordnet ist. Dies ist konstruktiv besonders vorteilhaft, da die Sonotrode oftmals vertikal in Richtung des Ambosses verfahrbar ausgestaltet ist und auch bei schmalem Amboss zuverlässig eine Positionserfassung des dort überstehenden Ventilendes oder eines anderen zu verschließenden Teils ermöglicht. Dadurch, dass die betreffende Reflexionslichtschranke nahe oder direkt an der Sonotrode angeordnet ist und mit dieser nach einem Schweißvorgang typischerweise vertikal nach oben aus dem Schweißbereich verfahren wird, kann eine Verschmutzung der Reflexionslichtschranke zumindest weitgehend verhindert werden.

Zur weiteren Verbesserung der Erfassung der Position des zu verschließenden Teils des Behältnisses kann die mindestens eine Lichtschranke auch zwei Reflexionslichtschranken aufweisen, um endseitige Eckbereiche des zu verschließenden Teils zu erfassen. Der verbleibende Überstand nach Anbringen der zweiten Schweißnaht kann damit noch weiter reduziert werden.

Es ist vorteilhaft, wenn die mindestens eine Lichtschranke eine Erfassungsrichtung aufweist, die schräg zu einer Wirkrichtung der Verschweißeinrichtung angeordnet ist. Die mindestens eine Lichtschranke kann dadurch aus dem direkten Arbeitsbereich der Verschweißeinrichtung entfernt angeordnet werden, beispielsweise neben oder über einer Sonotrode, falls die Verschweißeinrichtung eine Ultraschallschweißeinrichtung ist. Ein Sensor der mindestens einen Lichtschranke kann dadurch von dem betreffenden zu verschließenden Teil des Behältnisses beabstandet und folglich besser vor Verschmutzung geschützt werden.

Bevorzugt ist die Sensoreinrichtung starr an der Verschweißeinrichtung angeordnet. Die Erfassung der Position des zu verschließenden Teils Behältnisses relativ zu der Verschweißeinrichtung kann dadurch unmittelbar an der Verschweißeinrichtung selbst exakt und direkt erfolgen.

Besonders bevorzugt ist die Verschließvorrichtung dazu ausgebildet, Behältnisse in Form von Ventilsäcken mit Füllventilen als zu verschließenden Teil zu verschweißen, wobei die erste Position derart gewählt ist, dass eine erste Schweißnaht an einem sackseitigen Ende des Füllventils erzeugt wird und die zweite Position derart gewählt ist, dass eine zweite Schweißnaht an einem äußeren Ende des Füllventils erzeugt wird. Ein Abstand der zweiten Schweißnaht und dem äußeren Ende ist möglichst gering und beträgt bevorzugt nur wenige Millimeter oder weniger. Durch die Kombination aus Steuereinheit und Sensoreinrichtung kann eine präzise Platzierung des zu verschließenden Teils des Behältnisses und der Verschweißeinrichtung zueinander erfolgen, um die zweite Schweißnaht entsprechend zu setzen.

Die Erfindung betrifft ferner eine Befüllvorrichtung zum Befüllen eines flexiblen Behältnisses, insbesondere eines Ventilsacks, mit einem pulverförmigen Füllgut, aufweisend einen Füllstutzen, der zum Einführen in ein Füllventil des Behältnisses vorgesehen ist, sowie eine Verschließvorrichtung nach der vorhergehenden Beschreibung.

Wie vorangehend erwähnt ist es vorteilhaft, wenn die Befüllvorrichtung eine Bewegungseinrichtung aufweist, die dazu ausgebildet ist, den zu verschließenden Teil des Behältnisses relativ zu der Verschweißeinrichtung der Verschließvorrichtung zu bewegen. Dies kann beispielsweise ein Roboterarm oder eine andere mechanische, lasttragende Führung sein.

Weiterhin betrifft die Erfindung ein Verfahren zum Verschließen eines flexiblen Behältnisses, insbesondere eines Ventilsacks, aufweisend Ansteuern mindestens einer Bewegungseinrichtung zum Platzieren einer Verschweißeinrichtung in einer ersten Position an einem zu verschließenden Teil des Behältnisses, Erzeugen einer ersten Schweißnaht, Ansteuern der mindestens einen Bewegungseinrichtung zum Platzieren der Verschweißeinrichtung in einer zweiten Position an dem zu verschließenden Teil des Behältnisses, und Erzeugen einer zweiten Schweißnaht, wobei das Erreichen zumindest einer der beiden Positionen durch eine Sensoreinheit zum Erfassen einer Position des zu verschließenden Teils des Behältnisses erfasst wird.

Die Erfindung ist nachfolgend anhand eines in der Zeichnung dargestellten Ausführungsbeispiels näher erläutert. Es zeigen:

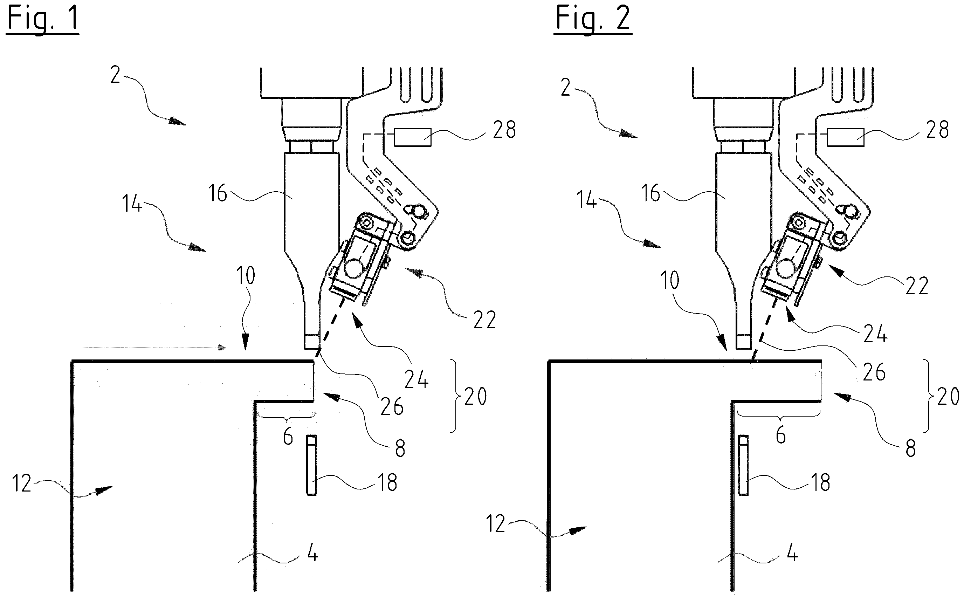

- Fig. 1 bis 4: zeigen die Verschließvorrichtung in mehreren unterschiedlichen Zuständen beim Durchführen einer Verschweißung.

Fig. 1 zeigt eine Verschließvorrichtung 2 zum Verschließen eines flexiblen Behältnisses 4. In dieser Darstellung ist das Behältnis 4 ein Ventilsack 4, der ein schlauch- oder stutzenartig ausgeführtes Füllventil 6 als zu verschließenden Teil besitzt, durch den ein Füllstutzen in das Behältnis 4 einführbar ist, um ein insbesondere pulverförmiges Füllgut einzufüllen. Das Füllventil 6 wird nach dem Befüllen verschweißt, um das Behältnis 4 zu verschließen.

In Fig. 1 ist das Behältnis 4 bereits befüllt und eine (nicht gezeigte) Bewegungseinrichtung, die beispielsweise als ein Roboterarm ausgeführt ist, bewegt das Behältnis 4 in der Zeichnungsebene von links in Richtung der Verschließvorrichtung 2, um es zu verschließen. Dabei ist das Füllventil 6 in der Bewegungsrichtung nach vorne ausgerichtet und zeigt in der Zeichnungsebene nach rechts. Das Füllventil 6 weist ein äußeres Ende 8 sowie ein inneres, sackseitiges Ende 10 auf, an das sich ein Hauptvolumen 12 des Behältnisses 4 anschließt, das durch das Füllventil 6 befüllbar ist. Die Verschließvorrichtung 2 weist eine Verschweißeinrichtung 14 auf, die als thermische Schweißeinrichtung ausgeführt sein kann oder wie hier beispielhaft als Ultraschallschweißeinrichtung, die eine Sonotrode 16 und einen damit zusammenwirkenden Amboss 18 aufweist. Die Sonotrode 16 und der Amboss 18 sind einander gegenüber positioniert. Beispielhaft ist der Amboss 18 vertikal unterhalb der Sonotrode 16 angeordnet und weist eine nach oben zu der Sonotrode 16 hin gerichtete Auflagefläche auf. Die Sonotrode 16 ist indes vertikal nach unten zu dem Amboss 18 gewandt. Zwischen der Sonotrode 16 und dem Amboss 18, die beispielhaft zueinander bewegbar gelagert und antreibbar sind, ist ein Spalt 20 gebildet, in den das Füllventil 6 einführbar ist.

Die Verschließvorrichtung weist weiterhin eine Sensoreinrichtung 22 auf, die sonotrodenseitig starr an der Verschweißeinrichtung 14 angeordnet. Sie weist beispielhaft eine Reflexionslichtschranke 24 auf, welche eine durch eine gestrichelte Linie dargestellte Erfassungsrichtung 26 besitzt, die schräg zu einer Wirkrichtung der Verschweißeinrichtung angeordnet ist. Die Wirkrichtung kann in dieser Darstellung mit einer gedachten Verbindungslinie zwischen der Sonotrode 16 und dem Amboss 18 angenähert werden. Mit anderen Worten verläuft die Erfassungsrichtung 26 schräg zu einer Vertikalen. Die Sensoreinrichtung 22 kann dadurch etwas von dem Spalt 20 beabstandet neben der Sonotrode 16 platziert werden, sodass ein gewisser Abstand zu dem Füllventil 6 aufrechterhalten wird und die Reflexionslichtschranke 24 somit vor Verschmutzung geschützt wird.

Die Sensoreinrichtung 22 ist vorgesehen, um zumindest eine Position des äußeren Endes 8 des Füllventils 6 zu erfassen. Eine Steuereinheit 28 ist exemplarisch vorgesehen, die zu der Verschließvorrichtung 2 oder zu einer Befüllvorrichtung gehören kann, in die die Verschließvorrichtung 2 integriert ist. Die Steuereinheit 28 ist mit der Sensoreinrichtung 22 gekoppelt und dazu ausgebildet, die Verschweißeinrichtung 14 zum Erzeugen einer Schweißnaht anzusteuern. Durch die Erfassung der Position zumindest des äußeren Endes 8 des Behältnisses 4 kann eine Schweißnaht präzise an dem äußeren Ende 8 platziert werden. Die Steuereinheit 28 kann durch Ansteuern einer entsprechenden Bewegungseinrichtung das Behältnis 4 und/oder die Verschweißvorrichtung 14 derart bewegen, dass die Verschweißeinrichtung 14 und das Behältnis 4 zwei vorbestimmte Positionen einnehmen können, in denen jeweils eine Schweißnaht erzeugt wird.

Fig. 1 zeigt den Beginn des Einführens des Füllventils 6 in den Spalt 20 nach dem Befüllen des Behältnisses 4. Hier erreicht das äußere Ende 8 die Erfassungsrichtung 26 der Sensoranordnung 22. Wie in Fig. 2 dargestellt, wird das Behältnis 4 zunächst weiterbewegt, sodass das Füllventil 6 weiter in den Spalt 20 hineinragt und die Sonotrode 16 und der Amboss 18 nahe des sackseitigen Endes 10 angeordnet sind.

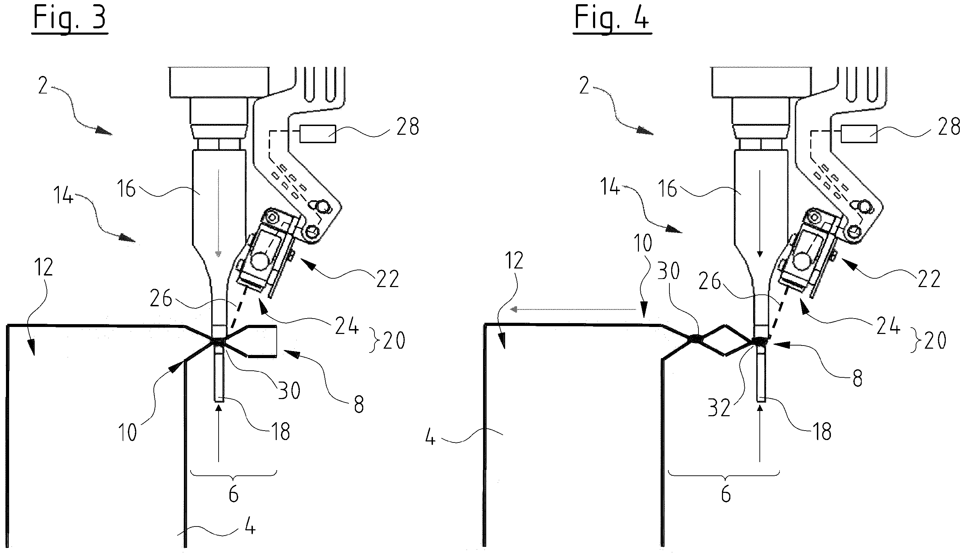

In dieser Position werden anschließend, wie in Fig. 3 dargestellt, der Amboss 18 und die Sonotrode 16 zueinander bewegt, sodass sich der Spalt 20 in vertikaler Richtung verkleinert, was zum Einschließen des Füllventils 6 führt. Durch Aktivieren der Sonotrode 16 erfolgt eine Verschweißung des Füllventils 6 durch Generieren einer ersten Schweißnaht 30 nahe des sackseitigen Endes 10.

Anschließend werden die Sonotrode 16 und der Amboss 18 wieder auseinander bewegt, um das Behältnis 4 und damit das Füllventil 6 wieder etwas aus dem Spalt 20 herauszubewegen. Die Sensoranordnung 22 kann durch Erkennen einer Endkante des äußeren Endes 8 feststellen, wann das äußere Ende 8 im Begriff ist, den Spalt 20 zu erreichen. In dieser Position, die im Rahmen dieser Offenbarung zweite Position genannt wird, wird die Relativbewegung des Behältnisses 4 und der Verschweißeinrichtung 14 unterbrochen und es wird eine zweite Schweißnaht 32 hergestellt. Diese befindet sich möglichst nah an dem äußeren Ende 8 des Füllventils 6 und reduziert damit einen freien, offenen Überstand des Füllventils 6.

### Bezugszeichenliste

- 2: Verschließvorrichtung
- 4: Behältnis / Ventilsack
- 6: Füllventil
- 8: äußeres Ende
- 10: sackseitiges Ende
- 12: Hauptvolumen
- 14: Verschweißeinrichtung
- 16: Sonotrode
- 18: Amboss
- 20: Spalt
- 22: Sensoreinrichtung
- 24: Reflexionslichtschranke
- 26: Erfassungsrichtung
- 28: Steuereinheit
- 30: erste Schweißnaht
- 32: zweite Schweißnaht

## Patentansprüche

1. Verschließvorrichtung (2) zum Verschließen eines flexiblen Behältnisses (4), insbesondere eines Ventilsacks (4), aufweisend eine Verschweißeinrichtung (14), eine Sensoreinrichtung (20) zum Erfassen einer Position eines zu verschließenden Teils (6) des Behältnisses (4) und eine Steuereinheit (28), wobei die Steuereinheit (28) mit der Sensoreinrichtung (22) und der Verschweißeinrichtung (14) gekoppelt ist und dazu ausgebildet ist, durch Ansteuerung mindestens einer Bewegungseinrichtung die Verschweißeinrichtung (14) in eine erste Position und eine davon beabstandete zweite Position an dem zu verschließenden Teil (6) des Behältnisses (4) zu platzieren, das Erreichen zumindest einer der beiden Positionen durch die Sensoreinheit (20) zu erfassen, und jeweils an der ersten und der zweiten Position die Verschweißeinrichtung (14) zum Erzeugen einer Schweißnaht (30, 32) an dem Behältnis (4) anzusteuern.

2. Verschließvorrichtung nach Anspruch 1, bei welcher die Bewegungseinrichtung dazu vorgesehen ist, das flexible Behältnis (4) zu tragen und zu bewegen.

3. Verschließvorrichtung nach Anspruch 1 oder 2, bei welcher die Bewegungseinrichtung dazu ausgebildet ist, nach dem Vorgang des Befüllens das befüllte Behältnis (4) zum Einnehmen der ersten bzw. zweiten Position zu bewegen, wobei die Verschweißeinrichtung (14) und die Sensoreinrichtung (22) stationär angeordnet sind.

4. Verschließvorrichtung (2) nach einem der vorangehenden Ansprüche, wobei die Verschweißeinrichtung (14) eine thermische Schweißeinrichtung oder eine Ultraschallschweißeinrichtung ist, wobei die Ultraschallschweißeinrichtung einen Amboss (18) zur Auflage des zu verschließenden Teils (6) des Behältnisses (4), insbesondere eines Füllventils (6) eines Ventilsacks (4), und eine Sonotrode (16) umfasst, die zueinander bewegbar angeordnet sind.

5. Verschließvorrichtung (2) nach einem der vorangehenden Ansprüche, wobei die Sensoreinrichtung (20) mindestens eine Lichtschranke (24) aufweist und wobei vorzugsweise die mindestens eine Lichtschranke (24) mindestens eine Reflexionslichtschranke (24) umfasst, die sonotrodenseitig angeordnet ist.

6. Verschließvorrichtung (2) nach Anspruch 5, wobei die mindestens eine Lichtschranke (24) zwei Reflexionslichtschranken (24) aufweist, um endseitige Eckbereiche des zu verschließenden Teils (6) des Behältnisses (4) zu erfassen.

7. Verschließvorrichtung (2) nach Anspruch 5 oder 6, wobei die mindestens eine Lichtschranke (24) eine Erfassungsrichtung (26) aufweist, die schräg zu einer Wirkrichtung der Verschweißeinrichtung (14) angeordnet ist.

8. Verschließvorrichtung (2) nach einem der vorhergehenden Ansprüche, wobei die Sensoreinrichtung (20) starr an der Verschweißeinrichtung (14) angeordnet ist.

9. Verschließvorrichtung (2) nach einem der vorhergehenden Ansprüche, wobei die Verschließvorrichtung (2) dazu ausgebildet ist, Behältnisse (4) in Form von Ventilsäcken (4) mit Füllventilen (6) als zu verschließenden Teil (6) zu verschweißen, wobei die erste Position derart gewählt ist, dass eine erste Schweißnaht (30) an einem sackseitigen Ende (10) des Füllventils (6) erzeugt wird und die zweite Position derart gewählt ist, dass eine zweite Schweißnaht (32) an einem äußeren Ende (8) des Füllventils (6) erzeugt wird.

10. Befüllvorrichtung zum Befüllen eines flexiblen Behältnisses (4), insbesondere eines Ventilsacks (4), mit einem pulverförmigen Füllgut, aufweisend einen Füllstutzen, der zum Einführen in ein Füllventil (6) des Behältnisses (4) vorgesehen ist, sowie eine Verschließvorrichtung (2) nach einem der vorhergehenden Ansprüche.

11. Befüllvorrichtung nach Anspruch 10, ferner aufweisend eine Bewegungseinrichtung, die dazu ausgebildet ist, das Behältnis (4) relativ zu der Verschweißeinrichtung (14) der Verschließvorrichtung (2) zu bewegen.

12. Befüllvorrichtung nach Anspruch 11, bei welcher die Bewegungseinrichtung dazu ausgebildet ist, ein leeres Behältnis (4) aufzunehmen und einem Befüllstutzen zuzuführen und nach dem Vorgang des Befüllens das befüllte Behältnis (4) zum Einnehmen der ersten bzw. zweiten Position zu bewegen

13. Verfahren zum Verschließen eines flexiblen Behältnisses (4), insbesondere eines Ventilsacks (4), aufweisend Ansteuern mindestens einer Bewegungseinrichtung zum Platzieren einer Verschweißeinrichtung (14) in einer ersten Position an einem zu verschließenden Teil (6) des Behältnisses (4), Erzeugen einer ersten Schweißnaht (30), Ansteuern der mindestens einen Bewegungseinrichtung zum Platzieren der Verschweißeinrichtung (14) in einer zweiten Position an dem zu verschließenden Teil (6) des Behältnisses (4), und Erzeugen einer zweiten Schweißnaht (32), wobei das Erreichen zumindest einer der beiden Positionen durch eine Sensoreinheit (20) zum Erfassen einer Position des zu verschließenden Teils (6) des Behältnisses (4)erfasst wird.

14. Verfahren nach Anspruch 13, bei welchem nach dem Vorgang des Befüllens die Bewegungseinrichtung das befüllte Behältnis zum Einnehmen der ersten bzw. zweiten Position bewegt, wobei vorzugsweise die Verschweißeinrichtung und die Sensoreinrichtung stationär angeordnet sind.
